# EUROPÄISCHE PATENTANMELDUNG

(11) **EP 1 035 609 A2**
(43) Veröffentlichungstag der Anmeldung: **13.09.2000**
(21) Anmeldenummer: 00102748.1
(22) Anmeldetag: 10.02.2000
(51) Int. Cl.: H01M 8/04

(54) **Brennstoffzellensystem mit kathodenseitigen Wasserabtrennmitteln**

(30) Priorität: 12.03.1999 DE 19911016
(71) Anmelder: DaimlerChrysler AG, 70567 Stuttgart (DE)
(72) Erfinder: Konrad, Gerhard, Dr., 89081 Ulm (DE); Lamm, Arnold, Dr., 89275 Oberelchingen (DE); Wieland, Steffen, 74080 Heilbronn (DE)

(57) **Zusammenfassung**

Die Erfindung bezieht sich auf ein Brennstoffzellensystem mit mindestens einer Brennstoffzelle, die einen Anodenraum mit eintrittseitiger Anodenzuführung und austrittseitiger Anodenabführung sowie einen Kathodenraum mit eintrittseitiger Kathodenzuführung und austrittseitiger Kathodenabführung beinhaltet, und mit in der Kathodenabführung angeordneten Wasserabtrennmitteln.

Erfindungsgemäß beinhalten die Wasserabtrennmittel eine Wasserabtrehnmembraneinheit mit einem in der Kathodenabführung liegenden Gemischraum und einem davon durch eine Wasserabtrennmembran getrennten Wassersammelraum.

Verwendung z.B. als Direktmethanol-Brennstoffzellensystem für Brennstoffzellenfahrzeuge.

## Beschreibung

Die Erfindung bezieht sich auf ein Brennstoffzellensystem nach dem Oberbegriff des Anspruchs 1. Derartige Systeme sind beispielsweise in brennstoffzellenbetriebenen Kraftfahrzeugen einsetzbar. Über die Anodenzuführung wird ein geeignetes flüssiges oder gasförmiges Brennstoffgemisch, z.B. ein wasserstoffreiches Gasgemisch oder ein flüssiges Wasser/Methanol-Gemisch, in den Anodenraum der Brennstoffzelle eingespeist, wo der Brennstoff an der Anode elektrochemisch oxidiert wird, wonach das reagierte Gemisch über die Anodenabführung aus dem Anodenraum abgeführt wird. Über die Kathodenzuführung wird ein sauerstoffhaltiges Gas, wie Luft, in den Kathodenraum eingespeist, wo der Sauerstoff an der Kathode unter Wasserbildung reduziert wird, wonach das wasserhaltige Kathodenabgas über die Kathodenabführung aus dem Kathodenraum abgeführt wird.

In vielen Anwendungsfällen ist es erwünscht, das im Kathodenabgas enthaltene Wasser von den übrigen Bestandteilen abtrennen zu können, z.B. um das abgetrennte Wasser und/oder das vom enthaltenen Wasser gereinigte Kathodenabgas wieder im System zu nutzen. Zu diesem Zweck dienen die in der Kathodenabführung angeordneten Wasserabtrennmittel. Üblicherweise bestehen diese aus einem Kondensator, in welchem das Wasser bei geeignet niedriger Temperatur auskondensiert wird, was einen entsprechend großen und voluminösen Wärmeübertrageraufbau für den Kondensator erfordert, um das Kathodenabgas ausreichend herunterzukühlen. Häufig ist in der Kathodenabführung auch ein Expander in Form einer mit einem kathodenzufuhrseitigen Kompressor gekoppelten Turbine vorgesehen, wobei stromaufwärts und/oder stromabwärts des Expanders ein jeweiliger Kondensator angeordnet sein kann. Brennstoffzellensysteme dieser Art sind in der Offenlegungsschrift DE 197 01 560 A1 und den Patentschriften US 4 001 041, US 4 738 903 und US 5 599 638 beschrieben.

Das in der letztgenannten Druckschrift offenbarte System beinhaltet eine in der Kathodenabführung angeordnete Wasserrückgewinnungseinheit, die an ihrem wasserseitigen Ausgang rückgewonnenes Wasser in flüssiger Form bereitstellt, d.h. als Kondensator ausgelegt ist, und das flüssige Wasser einer Brennstoffeinspritzeinheit zuführt, die Methanol als Brennstoff in das flüssige Wasser zudosiert und in diesem löst. Das flüssige Methanol/Wasser-Gemisch wird einem als Turm ausgelegten Zirkulationstank zugeführt, der als Gas/Flüssigkeits-Separationseinheit ausgelegt ist, wozu er Röhren aus mikroporösem Material enthalten kann, die für mitgeführte Gase, insbesondere für Kohlendioxid, das mit dem kathodenseitigen Wasser eingeschleppt wurde, durchlässig ist, nicht jedoch für das flüssige Brennstoff/Wasser-Gemisch. Alternativ zur Verwendung solcher mikroporöser Röhren kann das flüssige Brennstoff/Wasser-Gemisch in den Bodenbereich des Zirkulationstanks zugeführt werden, wonach sich dann das gasförmige Kohlendioxid im oberen Tankbereich ansammelt und abgeführt werden kann.

Aus der Patentschrift US 5 432 023 ist es bekannt, das an der Kathode einer Brennstoffzelle gebildete Wasser über ein die Kathode kontaktierendes Dochtstück aus einem porösen Material in eine Wasserrückgewinnungskammer abzuziehen. Zur Bereitstellung der hierfür benötigten Dochtwirkung ist das Dochtstück mit in Richtung der Wasserrückgewinnungskammer z.B. in zwei Stufen geringer werdendem Porendurchmesser gefertigt, wobei der an die Kathode angrenzende Teil des Dochtstücks seinerseits einen gegenüber dem porösen Kathodenmaterial geringeren Porendurchmesser aufweist.

Auf dem chemischen Verfahrensgebiet der Veresterungsprozesse sind zur Wasserabtrennung oder Wasserzufuhr entsprechende Wasserabtrennmembranen in Gebrauch, meist in Form von Polymermembranen.

Der Erfindung liegt als technisches Problem die Bereitstellung eines Brennstoffzellensystems der eingangs genannten Art mit Wasserabtrennmitteln zugrunde, die sich vergleichsweise kompakt bauen lassen und eine zufriedenstellende Abtrennung von im Kathodenabgas enthaltenem Wasser ermöglichen.

Die Erfindung löst dieses Problem durch die Bereitstellung eines Brennstoffzellensystems mit den Merkmalen des Anspruchs 1. Bei diesem System beinhalten die Wasserabtrennmittel charakteristischerweise eine zur selektiven Wasserdampfabtrennung geeignete Wasserabtrennmembran. Hierfür eignen sich insbesondere die herkömmlicherweise in der chemischen Veresterungsprozesstechnik zur Wasserabtrennung oder Wasserzufuhr eingesetzten Membranen. Eine solche Wasserabtrennmembran besteht typischerweise aus einem polymeren oder porösen Material, z.B. aus
Keramik, Glas oder Metall, und leistet bei ausreichend hohem Druckgefälle vom auf der einen Membranseite angrenzenden Gemischraum zum auf der anderen Membranseite angrenzenden Wassersammelraum eine zufriedenstellend selektive Wasserabtrennung vom restlichen Kathodenabgas mittels Membran-Wasserabtrennprozessen, die an sich bekannt sind und daher hier keiner näheren Erläuterung bedürfen.

Da für diese Art der Wasserabtrennung die Temperatur nicht so stark abgesenkt werden braucht, wie dies für eine Kondensationsabtrennung erforderlich ist, läßt sich die Wasserabtrennmembraneinheit bei gleicher Wasserabtrennleistung deutlich kompakter und raumsparender bauen als die herkömmlicherweise eingesetzten Kondensatoren. Selbst wenn zusätzlich zur Wasserabtrennmembraneinheit ein Kondensator vorgesehen wird, kann dieser kompakter als herkömmlich ausfallen, da er nur noch eine um diejenige der Wasserabtrennmembraneinheit verringerte Wasserabtrennleistung erbringen braucht.

Bei einem nach Anspruch 2 weitergebildeten Brennstoffzellensystem ist in der Kathodenabführung zusätzlich ein Expander angeordnet, der zum unterstützenden Antrieb eines in der Kathodenzuführung angeordneten Kompressors dient und zur Kühlung des Kathodenabgases beiträgt.

Ein nach Anspruch 3 weitergebildetes Brennstoffzellensystem hat den Vorteil, daß das von der Wasserabtrennmembraneinheit abgetrennte Wasser in die Anodenzuführung rückgespeist und somit auf der Anodenseite genutzt werden kann. Dies ist z.B. für Systeme mit anodenseitigem Wasser/Methanol-Flüssigkeitskreislauf zweckmäßig, um dortige Wasserverluste zu kompensieren.

Bei einem nach Anspruch 4 weitergebildeten System schließt sich an den Wassersammelraum der Wasserabtrennmembraneinheit ein Kondensator an. Eine solche zweistufige Auslegung der Wasserabtrennmittel ermöglicht eine besonders effiziente Wasserabtrennung. In weiterer Ausgestaltung dieser Maßnahme ist nach Anspruch 5 eine Gasrückspeiseleitung vorgesehen, die durch die Wasserabtrennmembran hindurchgetretenes und in den Kondensator gelangendes Restgas, z.B. Restluft, in die Kathodenzuführung zur erneuten Nutzung rückspeist.

Bei einem nach Anspruch 6 weitergebildeten System sind die Wasserabtrennmembraneinheit und der Kondensator in eine gemeinsame Baueinheit integriert, mit der sich somit eine hohe Wasserabtrennleistung bei sehr kompakter Bauform erzielen läßt.

Vorteilhafte Ausführungsbeispieie der Erfindung sind in den Zeichnungen dargestellt und werden nachfolgend beschrieben.

Hierbei zeigen:
- Fig. 1: eine Blockdiagrammdarstellung eines Brennstoffzellensystems mit stromabwärts eines Expanders angeordneter Wasserabtrennmembraneinheit und
- Fig. 2: eine Blockdiagrammdarstellung eines Brennstoffzellensystems mit stromaufwärts eines Expanders angeordneter Wasserabtrennmembraneinheit.

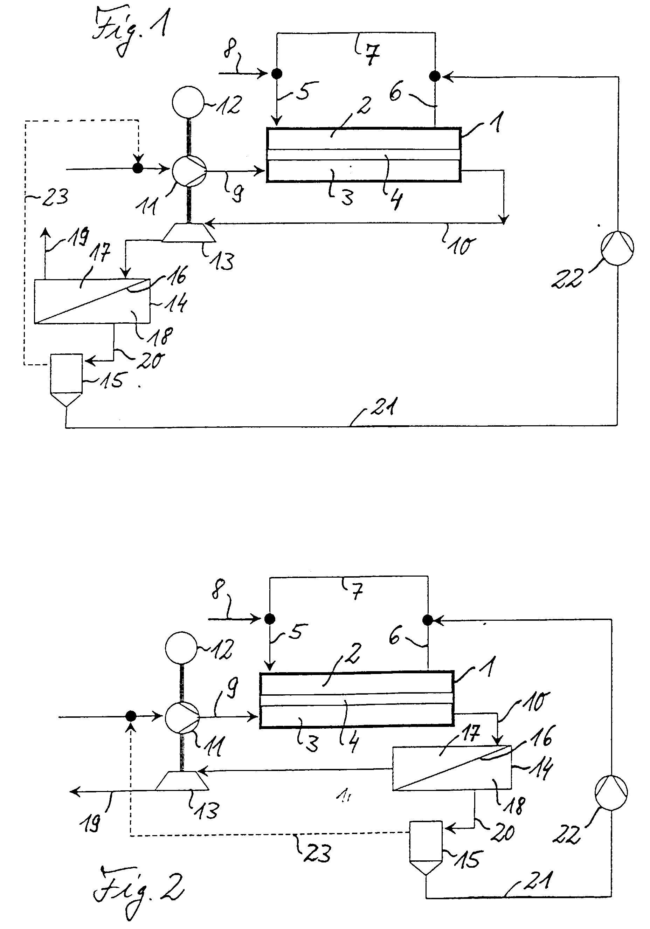

Das in Fig. 1 dargestellte Brennstoffzellensystem umfaßt eine Brennstoffzelle 1 herkömmlichen Typs mit einem Anodenraum 2, einem Kathodenraum 3 und einer diese beiden Räume trennenden, protonenleitenden Brennstoffzellenmembran 4, die in üblicher Weise auf ihren beiden dem Anodenraum 2 bzw. dem Kathodenraum 3 zugewandten Seiten die Anode und die Kathode trägt. Eine in den Anodenraum 2 mündende Anodenzuführleitung 5 und eine aus dem Anodenraum 2 ausmündende Anodenabführleitung 6 sind zu einem Anodenkreislauf 7 verbunden, in welchem ein geeignetes Brennstoffgemisch zirkuliert, z.B. ein flüssiges Wasser/Methanol-Gemisch. Über eine Einspeiseleitung 8 kann der Brennstoff, z.B. Methanol, in den Kreislauf 7 zudosiert werden. In den Kathodenraum 3 wird über eine Kathodenzuführleitung 9 ein sauerstoffhaltiges Gas, wie Luft, eingeleitet. Der enthaltene Sauerstoff wird an der Kathodenseite der Membran 4 reduziert, und die gebildeten Sauerstoffionen verbinden sich mit den durch die Membran 4 hindurchwandernden, durch Oxidation des Brennstoffs an der Anodenseite der Membran 4 gebildeten Protonen zu Wasser. Das sich dadurch aus Wasserdampf und Restgas bildende Kathodenabgas wird über eine Kathodenabführleitung 10 aus dem Kathodenraum 3 abgeführt.

Zur Wirkungsgraderhöhung wird das sauerstoffhaltige Gas unter Druck in den Kathodenraum 3 eingespeist, wozu in der Kathodenzuführleitung 9 ein Kompressor 11 angeordnet ist, der von einem Elektromotor 12 angetrieben wird. Ein Teil der für die Komprimierung des sauerstoffhaltigen Gases benötigten Energie wird mit Hilfe eines in der Kathodenabführleitung 10 angeordneten Expanders 13 zurückgewonnen, der z.B. als Turbine mit dem Kompressor 11 und dem Elektromotor 12 auf einer gemeinsamen Antriebswelle sitzt.

Stromabwärts des Expanders 13 sind in der Kathodenabführleitung 10 Wasserabtrennmittel vorgesehen, die zweistufig von einer Wasserabtrennmembraneinheit 14 und einem dieser nachgeschalteten Kondensator 15 gebildet sind. Die Wasserabtrennmembraneinheit 14 beinhaltet eine nur schematisch angedeutete Wasserabtrennmembran 16 eines geeigneten herkömmlichen Typs sowie einen an die eine Membranseite angrenzenden Gemischraum 17 und einen an die andere Membranseite angrenzenden Wassersammelraum 18. Insbesondere kann für die Wasserabtrennmembran 16 eine Polymermembran oder eine Membran aus einem porösem Keramik-, Glas- oder Metallmaterial verwendet werden. Das vom Expander 13 kommende Kathodenabgas wird in den Gemischraum 17 eingeleitet, und das in ihm enthaltene Wasser gelangt selektiv durch die Wasserabtrennmembran 16 hindurch zum Wassersammelraum 18, während das restliche, wasserbefreite Kathodenabgas über eine Abgasauslaßleitung 19 den Gemischraum 17 verläßt.

Die wasserabtrennende Funktion der Wasserabtrennmembran 16 wird durch Bereitstellung eines ausreichenden Druckgefälles zwischen dem Gemischraum 17 und dem Wassersammelraum 18 unterstützt. Dieses Druckgefälle geht auf die Wirkung des Kompressors 11 zurück, mit dem im Kathodenraum 3 und damit auch im Bereich der Kathodenabführleitung 10 stromaufwärts des Expanders 13 typischerweise ein Überdruck von mehreren bar, z.B. 2,5 bar, erzeugt wird. Der Betrieb des Expanders 13 ist so gewählt, daß die von ihm verursachte Überdruckverringerung in der Kathodenabführleitung 10 nur so groß ist, daß im Gemischraum 17 der Wasserabtrennmembraneinheit 14 noch ein zur Erfüllung der Wasserabtrennfunktion der betreffenden Membran 16 ausreichender Überdruck von typischerweise einem bis mehreren bar, z.B. 1,5 bar, verbleibt.

Der Kondensator 15 ist an eine aus dem Wassersammelraum 18 ausmündende Wasseraustrittsleitung 20 angeschlossen. Er vervollständigt die Wasserabtrennfunktion der Wasserabtrennmembraneinheit 14 durch Auskondensation des durch die Wasserabtrennmembran 16 selektiv abgetrennten Wasserdampfs von Restgas, das eventuell durch die Wasserabtrennmembran 16 hindurch mitgerissen wurde. Dazu wird der dem Kondensator 15 zugeführte Wasserdampf dort geeignet heruntergekühlt. Da ein beträchtlicher Teil des Kathodenabgases nicht durch die Wasserabtrennmembran 16 hindurchtritt, braucht der Kondensator 15 diesen Gasanteil nicht zu kühlen und kann daher im Vergleich zu Systemen ohne Wasserabtrennmembraneinheit mit deutlich geringerer Kondensationsleistung und damit Baugröße ausgelegt sein. Die Kühlfunktion des Kondensators 15 wird durch den Expander 13 unterstützt, da die dortige Entspannung des Kathodenabgases zu einer entsprechenden Abkühlung desselben führt, beispielsweise von ca. 100°C auf der Expandereintrittsseite auf etwa 80°C auf der Expanderaustrittsseite.

Im Kondensator 15 kondensiertes Wasser wird über eine Wasserrückspeiseleitung 21, in der eine zugehörige Wasserförderpumpe 22 angeordnet ist, in den Anodenkreislauf 7 eingespeist. Eine solche Wasserrückgewinnung ist insbesondere dann zweckmäßig, wenn es sich bei der Brennstoffzelle 1 um eine sogenannte Direktmethanol-Brennstoffzelle (DMFC) handelt, bei welcher im Anodenkreislauf 7 ein flüssiges Wasser/Methanol-Gemisch zirkuliert. Denn bei einer solchen DMFC treten mit jedem Übertritt eines Methanolmoleküls durch die Brennstoffzellenmembran auch sechs Moleküle Wasser von der Anoden- zur Kathodenseite über. Wenn auf eine zusätzliche Wasserbetankung verzichtet werden soll, muß daher das kathodenseitig abgetrennte Wasser wieder dem Anodenkreislauf 7 zugeführt werden. Dort kann es in Verbindung mit der Methanoleinspeisung zur Einstellung eines konstant bleibenden Wasser/Methanol-Verhältnisses genutzt werden. Im gezeigten Fall wird das Wasser dem aus dem Anodenraum 2 austretenden Gemisch, das im Fall eines Wasser/Methanol-Kreislaufs aus Wasser, Methanol und Kohlendioxidgas besteht, vor der Mündungsstelle der Brennstoffeinspeiseleitung 8 zudosiert.

Das im Kondensator 15 nicht auskondensierte Restgas, das bei Verwendung von Luft als sauerstoffhaltiges Gas entsprechend aus Restluft besteht, kann bei Bedarf als angereicherte Luft über eine optionale, gestrichelt gezeichnete Gasrückspeiseleitung 23 in die Kathodenzuführleitung 9 auf der Saugseite des Kompressors 11 rückgespeist werden.

Das in Fig. 2 gezeigte Brennstoffzellensystem entspricht demjenigen von Fig. 1 mit der Ausnahme, daß die Wasserabtrennmembraneinheit 14 mit ihrem Gemischraum 17 stromaufwärts und nicht stromabwärts des Expanders 13 in der Kathodenabführleitung 10 angeordnet ist. Im übrigen sind die Komponenten und der Aufbau des Systems von Fig. 2 zu demjenigen von Fig. 1 identisch, so daß der Übersichtlichkeit halber für entsprechende Elemente dieselben Bezugszeichen verwendet sind und zu deren Beschreibung auf diejenige von Fig. 1 verwiesen werden kann. Als ein Effekt der bezüglich des Expanders 13 stromaufwärtigen Lage der Wasserabtrennmembraneinheit 14 steht der vom Kompressor 11 erzeugte Überdruck des sauerstoffhaltigen Gases im Kathodenraum 3 in gleicher Höhe auch im Gemischraum 17 der Wasserabtrennmembraneinheit 14 an, so daß das die Wasserabtrennfunktion der Wasserabtrennmembran 16 beeinflussende Druckgefälle zwischen dem Gemischraum 17 und dem Wassersammelraum 18 in diesem Ausführungsbeispiel von der Druckreduzierung durch den Expander 13 unbeeinflußt bleibt. Andererseits trägt nun die Kühlfunktion des Expanders nicht mehr zur Wasserkondensation im Kondensator bei.

Es versteht sich, daß weitere Realisierungen des erfindungsgemäßen Brennstoffzellensystems möglich sind. So kann je nach Anwendungsfall auf den Kondensator, auf die Wasserrückspeiseleitung und/oder auf den Expander der in den Fig. 1 und 2 gezeigten Systeme verzichtet werden, oder es können in letzteren zusätzliche herkömmliche Systemkomponenten eingefügt sein. Wenngleich die Wasserabtrennmembraneinheit und der Kondensator in den beiden gezeigten Ausführungsbeispielen als getrennte Baueinheiten dargestellt sind, ist es alternativ möglich, diese beiden Komponenten in eine gemeinsame Baueinheit zu integrieren und dadurch einen besonders kompakten Aufbau zu erzielen. Anodenseitig braucht nicht zwingend ein Anodenkreislauf vorhanden sein, gegebenenfalls genügt eine Brennstoffzuführung über die Anodenzuführleitung und eine Produktgasabführung über die Anodenabführleitung. Anstelle von Methanol kann auch jeder andere der für diesen Zweck bekannten Brennstoffe eingesetzt werden, insbesondere hierfür gebräuchliche Kohlenwasserstoffe und Kohlenwasserstoffderivate. Auch Wasserstoff, der z.B. in einer vorgeschalteten Wasserstofferzeugungsanlage, wie einer Methanolreformierungsanlage, erzeugt werden kann, ist als ein in diesem Fall gasförmiger Brennstoff verwendbar. Es versteht sich des weiteren, daß das erfindungsgemäße Brennstoffzellensystem aus einer Mehrzahl von geeignet miteinander verschalteten Brennstoffzellen bestehen kann.

## Patentansprüche

1. Brennstoffzeilensystem mit
- mindestens einer Brennstoffzelle (1), die einen Anodenraum (2) mit eintrittseitiger Anodenzuführung (5) und austrittseitiger Anodenabführung (6) und einen Kathodenraum (3) mit eintrittseitiger Kathodenzuführung (9) und austrittseitiger Kathodenabführung (10) beinhaltet, und
- in der Kathodenabführung (10) angeordneten Wasserabtrennmitteln (14, 15),
**dadurch gekennzeichnet, daß**
- die Wasserabtrennmittel eine zur selektiven Wasserdampfabtrennung geeignete Wasserabtrennmembraneinheit (14) mit einem in der Kathodenabführung (10) liegenden Gemischraum (17) und einem davon durch eine Wasserabtrennmembran (16) getrennten Wassersammelraum (18) beinhalten.

2. Brennstoffzellensystem nach Anspruch 1, weiter
**gekennzeichnet durch**
einen stromaufwärts oder stromabwärts der Wasserabtrennmembraneinheit (14) in der Kathodenabführung (10) angeordneten Expander (13).

3. Brennstoffzellensystem nach Anspruch 1 oder 2, weiter
**gekennzeichnet durch**
eine Wasserrückspeiseleitung (21) zur Rückspeisung des von der Wasserabtrennmembraneinheit (14) abgetrennten Wassers in die Anodenzuführung (5).

4. Brennstoffzellensystem nach einem der Ansprüche 1 bis 3, weiter
**gekennzeichnet durch**
einen an den Wassersammelraum (18) angeschlossenen Kondensator (15).

5. Brennstoffzellensystem nach Anspruch 4, weiter
**gekennzeichnet durch**
eine von einem Gasauslaß des Kondensators (15) zur Kathodenzuführung (9) führende Gasrückspeiseleitung (23).

6. Brennstoffzeilensystem nach Anspruch 4 oder 5, weiter
**dadurch gekennzeichnet, daß**
die Wasserabtrennmembraneinheit (14) und der Kondensator (15) in eine gemeinsame Baueinheit integriert sind.
